# EUROPÄISCHE PATENTSCHRIFT

(11) **EP 0 430 958 B1**
(45) Veröffentlichungstag und Bekanntmachung des Hinweises auf die Patenterteilung: **13.10.1993**
(21) Anmeldenummer: 89907750.7
(22) Anmeldetag: 15.07.1989
(51) Int. Cl.: F16H 57/02, B01D 19/00, F01M 13/04

(54) **DRUCKAUSGLEICHER ZWISCHEN MASCHINENGEHÄUSE UND UMGEBUNG**
DEVICE FOR EQUALIZING PRESSURE BETWEEN MACHINE HOUSING AND THE SURROUNDINGS
DISPOSITIF D'EGALISATION DE LA PRESSION ENTRE LE CARTER D'UNE MACHINE ET L'ENVIRONNEMENT

(30) Priorität: 21.07.1988 DE 3824810
(43) Veröffentlichungstag der Anmeldung: 12.06.1991
(73) Patentinhaber: ZF FRIEDRICHSHAFEN Aktiengesellschaft, 88038 Friedrichshafen (DE)
(72) Erfinder: RAUTER, Jürgen, D-7990 Friedrichshafen (DE)
(86) Internationale Anmeldenummer: EP8900830
(87) Internationale Veröffentlichungsnummer: WO9001130

(56) Entgegenhaltungen:
- EP-A- 0 155 115
- DE-A- 2 053 760
- FR-A- 2 414 849
- GB-A- 2 140 706
- GB-A- 2 157 586
- US-A- 4 319 996

## Beschreibung

Die Erfindung betrifft einen Druckausgleicher nach dem Oberbegriff des Anspruches 1 und geht aus von beim Druckausgleich Ölauswurf aus dem Gehäuse verhindernden Entlüftern mit Filtereinsätzen für schmutzbelastete Umgebungen. Solche z. B. aus der FR-A-2 414 849 bekannten Druckausgleicher mit Filtereinsätzen haben noch den Nachteil, daß kein Abblasen ohne jeglichen Schmiermittelauswurf und auch kein Einsaugen ohne allmähliches Eindringen von Schmutz möglich ist. Daher bedürften sie genau genommen einer sehr häufigen Wartung. Meistens kennt man solche Druckausgleicher als in die Wand von Maschinengehäusen einschraubbare Einsatzkörper, in welchen Filz oder Gewebe unter einer einen Atmungsspalt freilassenden Deckelplatte festgehalten ist.

Bei Erwärmung abgeblasener und sich dann im Umgebungsbereich niederschlagender Ölnebel täuscht häufig eine Undichtigkeit vor. In der ölverschmutzten, klebrig schmierigen Umgebung entstehen dabei bald starke Schmutzansammlungen, und der Atmungsspalt kann sich schließlich völlig verstopfen. Der damit verbundene Zusammenbruch der Entlüftungsfunktion führt dann zu einem gewissen Überdruck im Maschinengehäuse und in der Folge zur Zerstörung des Filters bzw. zu untragbaren echten stärkeren Ölverlusten über andere Gehäuseöffnungen. Leicht geschieht es dann, daß Wellendichtungen usw. wie Ventile wirken, da sie für Überdrücke nicht ausgelegt werden.

Mit solchen konventionellen Druckausgleichern, deren Einbauten aus Abscheideeinbauten und Filtermaterial bestehen, ist auch keine zuverlässige Wasserdichtigkeit erreicht, wie sie z. B. beim Einsatz von Schleppern in Reisfeldern oder bei anderen unter Wasser einzusetzenden Maschinen gefordert wird, um Wassereinbrüche in die Maschinengehäuse auszuschließen. Falsche oder fehlende Wartung führt oft zum Ausfall solcher an sich einfach erscheinenden Druckausgleicher.

Die Vermeidung von Flüssigkeitsaustritten unter Aufrechterhaltung der Atmungsfähigkeit gelingt inzwischen mit einer Vorrichtung zur Entlüftung von Leitungen, Gärungsbehältern etc., mit welcher unter Zuhilfenahme eines an sich bekannten flüssigkeitsdichten Membranmaterials der Austritt von Flüssigkeit verhindert werden kann, die von der EP-A-01 55 115 gezeigt wird. Dabei wird ein Filter, das eine für Gase durchlässige wasserdichte Kunststoffmembran mit einer für Gas und Wasser durchlässigen Stützbasis gemeinsam verwendet, um die Membran gegen Überdrücke auf der Flüssigkeitsseite zu schützen. Als Werkstoffe für diese der Membran unmittelbar nachgeordnete Basis werden genannt Kunststoff-Vliese, -Schaum und -Gewebe, Sintermetall, Keramik sowie Drahtsiebe. Dabei wird auch vorgeschlagen, Membran und Basis mittels eines Kunststoffrandes miteinander zu verbinden.

Diese Entlüftungsbauart eignet sich jedoch so noch nicht für Maschinengehäuse. Die eingangs dargelegten Verstopfungsprobleme bestehen weiterhin, weil es nach wie vor von außen her zu Schlamm- oder Staubansammlungen kommen kann, mit denen der Druckausgleicher am Rücksaugen von sauberer Luft, z. B. beim Abkühlen von Maschinengehäusen etc., gehindert wird. Speziell die allein vorgesehene steife Anordnung von Membran und Basis im Atmungskörper eignet sich nicht dazu, die Membran wartungsfrei auch dann von Verstopfungen freizuhalten, wenn die Luftseite des Druckausgleichers stark schmutzbelastet ist.

Die Aufgabe der Erfindung wird darin gesehen, wirklich flüssigkeitsdichte und keine Ölnebel mehr ablassende Druckausgleicher für Maschinengehäuse zu schaffen, welche im rauhen Außenbetrieb und bei starkem Schmutz im Außenbereich deutlich längere Brauchbarkeit haben und im Normalfall keinen Wartungsaufwand mehr erfordern, indem sie einerseits bei geringem baulichem Aufwand in beiden Richtungen luft- bzw. gasdurchlässig, aber möglichst überhaupt nicht mehr öl- bzw. wasserdurchlässig sind, sich andererseits aber auch selbst reinigen.

Die Lösung dieser Aufgabe wird mit dem Druckausgleicher gemäß Kennzeichen des Anspruches 1 im wesentlichen dadurch erreicht, daß nun ein aus Wasserleitungslüftern etc. bekanntes Material zu einem zweckmäßig gestalteten Schmiermittelausflußverhinderer verwendet wird. Dabei wird die flüssigkeitsdichte, aber hochgasdurchlässige Membran aus hauchdünner, mikroporöser Kunststoff-Folie unter ein- oder beidseitiger Zusammenfügung mit flexiblem, aber biegezäherem Trägermaterial (wie z. B. Glasfaservlies, Lochfolie, Kunststoffasergewebe etc.) so flexibel ausgeführt und allseitig vom Atmungskanal biegefähig eingespannt, daß sie sowohl gegen mechanische Schäden aus Schmutzanlagerungen geschützt ist, als auch so weit durch verschmutzungsbedingte Druckdifferenzen ausbeulfähig bleibt, daß sie beim Verändern der verschmutzungsbedingten Druckdifferenzen flattern bzw. vibrieren kann, wodurch ein Selbstreinigungseffekt mit Abschüttelung und Aufbrechen sowie Abblasung der Membranbeläge erreicht wird, ohne daß die Membran selbst reißt oder ihre flüssigkeitsabdichtende Wirkung verliert.

Die Folie hat dazu mindestens schmiermittelseitig einen Bewegungsfreiraum im Gehäuse des Druckausgleichers, in welchen hinein sie relativ widerstandsfrei ein- und ausbeulen kann. Die damit verbundenen wechselgerichteten Verformungen sind gewollt, damit eventuelle Ablagerungen auf der Außenseite der Membran am Anbacken gehindert werden.

Weitere Vorteile werden durch die in den Unteransprüchen angegebenen Ausführungsformen erreicht.
- Der Freiraum ist besonders wirksam, indem zwei zueinander beabstandete und flexibel abgestützte Membranen vorgesehen sind, bei welcher die innere das Öl aus dem Zwischenraum fernhält. Die äußere Membran verhindert den Wassereintritt und schützt den Zwischenraum vor Staub etc.
- Je nach Druckrichtung können sich die an ihrem Umfang gegen einen Elastomer-Ring elastisch eingespannten Membranen nach außen oder innen wölben und dabei nötigenfalls immer wieder neu von Ablagerungen selbsttätig periodisch befreien, indem sie auch Verkrustungen abstoßen bzw. aufbrechen.
- Durch die beabstandete Einspannung zweier Membranen mit jeweils mindestens einer eigenen Stützbasis kann eine weitere Erhöhung der Standzeiten erreicht werden.
- Mit den der Membran eigenen physikalischen Werten lassen sich besonders günstige Funktionseigenschaften in Druckausgleichern nach der Erfindung erreichen.
- Bei Verwendung eines auch für hohe und tiefe Temperaturen geeigneten Kunststoffes, wie z. B. PTFE, wird eine sehr lange Lebensdauer bei guten Entlüftungsleistungen auch unter extremen Bedingungen erreicht. Bevorzugt werden die Folien der Membran mit einer Dicke von ca. 0,01 bis 0,10 mm bei einer Porengröße von ca. 0,2 bis 2,0 µm und einer Porosität von ca. 80 bis 100 % gefertigt und bleiben dann bis ca. 2 bar Eintrittsdruck öldicht. Der bevorzugt verwendete Kunststoff PTFE besitzt eine sehr hohe Chemikalienresistenz zwischen -240 °C bis +270 °C.
- Durch Verwendung eines vormontierten und die Membrane schützenden Einsatzkörpers lassen sich verschiedenerlei Maschinengehäuse mit Druckausgleicher gleicher Bauformen und Anordnungsmöglichkeiten ausstatten.
- Wenn ein Schmutzabweiser in den Einsatzkörper unmittelbar integriert ist, so ist der abzuhaltende Schmutzanteil geringstmöglich und günstig kontrollierbar.
- Bei Anordnung des Schmutzabweisers im Gehäusemantel wird eine beschädigungsgeschützte Einbeziehung in die Gehäusekontur erleichtert.
- Bei Anordnung einer Atmungsöffnung innerhalb einer glockenförmigen Abdeckung, vorzugsweise etwa im oberen Fünftel derselben, kommt die Membran in den Bereich geringster Luftströmungsgeschwindigkeiten zu liegen und ist dabei auch durch die Abdeckung gegen eventuelle mechanische Beschädigungen und unmittelbare Verstopfungen durch Ablagerungen bzw. Eisbildungen gut geschützt, da diese außerhalb der Abdeckung erfolgen können.
- Mit einem die Textilmembran federnd auf einen elastischen Dichtring aufpressenden Schnappdeckel als Niederhalter wird neben einer einfachen beschädigungssicheren Montage eine auch z. B. bei Strömungsrichtungsänderungen oder anderen Gründen für Dichtkraft-Richtungswechsel ausreichend nachgiebige Selbstnachdichtung erreicht.
- Durch in Teilbereichen der Unterkante der Abdeckung vorgenommene Sieken erhält man neben einer Reihe schlitzförmiger Durchtrittsquerschnitte am Umfang nicht nur eine gute Stoßunempfindlichkeit, sondern auch eine Sicherung gegen unbefugtes bzw. fehlerhaftes Öffnen und Wiedereinsetzen der Membran.
- Einsatzkörper in Form von Einschraubnippeln ähnlich bekannter Ausgestaltungen können mit einer kreisförmigen Membran versehen werden, um z. B. in Gewindebohrungen von Maschinengehäusen eingesetzt zu werden.
- Durch Ausgestaltung des Einsatzkörpers als Ringkassette und Verwendung einer kreisringförmigen Membran in radialer Anordnung läßt sich der Druckausgleicher einer Wellendichtung axial oder auch radial zuordnen. Mit der radialen Zuordnung würde Baulänge gespart und die Kassette lediglich in eine vergrößerte Lagerbohrung mit der Wellendichtung zusammen eingesetzt. Bei axialer Zuordnung würde ein kleiner Durchmesser möglich.
- Dank guter Elastizität der Textilmembran kann dieselbe unter Doppelnutzung des Einbauraumes auch in ein aus Elastomer-Werkstoff gefertigtes Dichtelement unmittelbar z. B. durch Klebung mit eingepaßt werden, so daß bei solcher Verwendung überhaupt kein separates Druckausgleich-Element mehr notwendig ist.
- Eine besonders günstige Plazierung der Textilmembranen ergibt sich bei Einsatz derselben in einem parallel zur Welle vorgesehenen und diese mit Abstand außen umschließenden mantelförmigen Dichtungsmittelteil, in welchen die Textilmembranen in Fliehkraftrichtung in entsprechende Fenster eingeklebt ist, wobei eine axiale Überdeckung der Fenster durch einen Gehäusebund oder eine Buchse eine vorteilhafte Schmutzabweisung bewirkt.

Die Erfindung erschließt die physikalischen Vorteile des speziellen Membran-Werkstoffes nunmehr auch für die Spezialanwendungen bei der Belüftung bzw. Entgasung von ölführenden Maschinengehäusen, welche erheblicher Verschmutzung von innen und außen und dem laufenden Wechsel der Umgebungsbedingungen ausgesetzt sind. Bisher waren technische Anwendungen der vorgeschlagenen Membranwerkstoffe nur zur großflächigen Abdeckung empfindlicher Elektronikelemente und in der Biotechnik mit einseitig beaufschlagten Membranen bekanntgeworden und deren Einsatz als Kombination von Überdruck- und Belüftungsventil, Ölabscheider und Wassereinbruchssicherung an auch der Außenverschmutzung ausgesetzten Maschinengehäusen noch nicht erfolgt bzw. nahegelegt gewesen und war eine Selbstreinigung in rauhem Einsatz noch nicht erreicht worden.

Die Erfindung wird im folgenden anhand schematischer Zeichnungen von Ausführungsbeispielen näher erläutert.
- Fig. 1: zeigt einen Druckausgleicher mit zwei Membranen in einem als Einschraubnippel geformten Einsatzkörper;
- Fig. 2: zeigt einen vergrößerten Ausschnitt von zwischen einem Klemmdeckel und einem als Distanzgeber dienenden O-Ring eingespannten Membranen mit schmutz- und ölfrei bleibendem Zwischenraum;
- Fig. 3: zeigt den Druckausgleicher in Form eines als Ringkassette ausgebildeten Einsatzkörpers, welcher eine Wellendichtung radial außen umschließt;
- Fig. 4: zeigt einen ebenfalls als Ringkassette gestalteten Druckausgleicher, welcher einer Wellendichtung axial vorgeordnet ist;
- Fig. 5: zeigt einen unmittelbar selbst als Dichtelement ausgestalteten Druckausgleicher mit in das dichtende Elastomer eingelassenen, durch die Membran verschlossenen Fenstern.

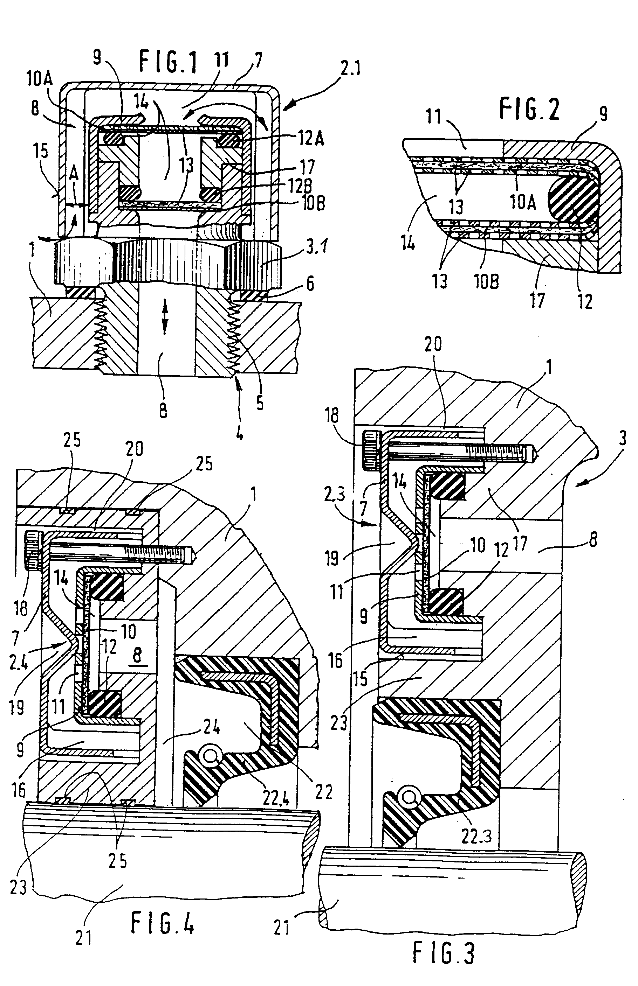

In Fig. 1 ist in einem Maschinengehäuse 1 der Druckausgleicher 2.1 mittels eines kompletten als Nippel gestalteten Einsatzkörpers 3.1 in eine Gehäuseöffnung 4 eingesetzt, in welcher er durch Gewinde 5 unter Zusammenpressen der Gehäusedichtung 6 befestigt ist. Der Einsatzkörper 3.1 wird hierbei durch eine glockenförmige Abdeckung als Schmutzabweiser 7 außen so überdeckt, daß durch einen Abstand A ein Luftspalt etwa entsprechend dem freien Querschnitt des den Einsatzkörper 3.1 durchdringenden Atmungskanales 8 frei bleibt. Der Atmungskanal 8 ist gegenüber diesem Luftspalt unter der Abdeckung 7 mittels eines auf dem Einsatzkörper 3.1 aufgeklemmten Niederhalters 9 durch zwei als Schmutzfalle und Schmiermittelausflußverhinderer dienende Membranen 10A + 10B aus an sich bekanntem flüssigkeitsdichtem, aber gasdurchlässigem Membranwerkstoff abgeschlossen. Dabei ist die innere Membran 10B unbedingt öldicht und die äußere 10A wenigstens wasserdicht auszuführen, so daß der Zwischenraum öl- und wasserfrei bleibt und der äußeren Membran 10A Platz bietet zum Ausbeulen. Der Niederhalter 9 besitzt hier über dem Atmungskanal 8 eine oder mehrere Bohrungen 11, um Luft bzw. Gas, welche die Membran 10 in beiden Richtungen passieren können, ein- und austreten zu lassen. An ihrem Außenumfang werden die Membranen 10 unter Vorspannung gegen Elastomer-Unterlagen 12, welche hier als O-Ringe vorgesehen sind, angepreßt. Der Werkstoff der Membran 10 kann dabei zum Schutz gegen allzustarkes Ausbeulen ein- oder beidseitig durch perforierte Stützfolien 13 oder vliesähnliches bzw. gitterartiges Stützmaterial vor mechanischen Schäden geschützt werden, wobei er seine Ausbeulfähigkeit jedoch beibehalten muß. Zum Schutze vor mechanischen Beschädigungen werden die Innenränder der Öffnung 11 des Niederhalters 9 und auch die Unterlagen 12 mit Kantenabrundungen versehen. Die äußere Membran 10A wird durch eine sie unter ihrem Außenrand im Zwischenraum 14 abstützende Elastomer-Unterlage 12A mit Rundkantenprofil von der oberen Stirnseite der Distanzhülse 17 dadurch auf einem für die Schwingungen der Membrane 10 ausreichendem berührungssicheren Abstand gehalten, daß die als O-Ring ausgeführte Elastomer-Unterlage 12A dicker gewählt wird als ein sie zum Zentrum des Atmungskanales 8 hin radial abstützender Ringbund des Distanzelementes 17. Dabei ergibt sich für die äußere Membran 10A eine um etwa den Ringbund des Distanzelementes 17 größere Fläche als für die innere Membran 10B, welche mit Hilfe der unteren Stirnseite der Distanzhülse 17 sowie der dieser unterlegten unteren Elastomer-Unterlage 12B auf eine etwa deren Dicke entsprechende Eindrehung des Einsatzkörpers 3.1 gedrückt wird. Durch die Flächenunterschiede und unterschiedliche Porositäten bzw. Elastizitäten ist es möglich, beim Abblasen von Luft etc. mittels den dann bewirkten unterschiedlichen Druckentspannungsstufen ein Vibrieren der Membranen 10A und 10B auszulösen, das zur Freihaltung der Oberflächen beiträgt.

In Fig. 2 ist eine Variante der vorerwähnten Anpressung der Membranen 10A, 10B mittels eines Niederhalters 9 auf die Elastomer-Unterlage 12 dargestellt, bei der sich durch einen gewissen radialen Überstand des als Elastomer-Unterlage 12 verwendeten O-Ringes über die vordere Stirnseite des Einsatzkörpers ein Freiraum 14 ergibt, in welchem die Membran 10 und eine eventuell mit ihr kombiniert eingesetzte Stützfolie bzw. ein Gitter 13 Schwingungsbewegungen vollführen können, ohne daß sich schädliche Scherkräfte an scharfen Kanten ergeben. Setzt man auf der Ölseite noch eine zweite Membran ein, die Öl sicher zurückhält, so kann die äußere Membran 10A gegen innere Verklebung durch Öl sicher geschützt werden.

In den weiteren Fig. ist jeweils nur eine Membran 10 mit Basis 13 angegeben. Jedoch werden auch hier vorzugsweise beabstandete Doppelmembranen in sinngemäß gleicher Anordnung wie nach Fig. 1 + 2 eingesetzt.

In Fig. 3 ist ein Beispiel des erfindungsgemäßen Druckausgleichers 2.3 bei ringförmiger Ausgestaltung dargestellt. Der äußere Rand 15 der Abdeckung 7 kann hier ähnlich dem Grundprinzip nach Fig. 1 achsparallel zum Atmungskanal 8 über die Elastomer- Unterlage 12 etwa gleich weit wie der Rand des Niederhalters 9 abgebogen werden. Zur Versteifung des Randes 15 und zur Festlegung bestimmter Luftzustrom- bzw. Abström-Öffnungen können in den Rand 15 längliche Sieken 16 eingearbeitet werden, die auch den radialen Abstand der Abdeckung 7 gegenüber dem Niederhalter 9 sicherstellen. Anstelle eines separat in das Maschinengehäuse 1 eingesetzten Einsatzkörpers wird hier ein entsprechender Hals 17 unmittelbar in ein Maschinengehäuse 1 bei entsprechender Zuordnung zu Atmungskanälen 8 eingedreht. Zur zusätzlichen Sicherung gegen Lockern können die Abdeckungen 7 mittels Schrauben 18 auf den Niederhalter 9 gedrückt werden, wenn in der Abdeckung beispielsweise mittig über dem Niederhalter 9 ein entsprechender Noppen 19 bzw. ein Distanzhalter vorgesehen wird. Ein derartiger ringförmiger Druckausgleicher 2.3 läßt sich leicht in eine Ringnut 20 beschädigungssicher anbauen, welche beispielsweise eine Welle 21 mit einem diese umfassenden Wellendichtring 22.3 mit kleiner axialer Zwischenwand 23 außen umschließt, wodurch sich eine radiale Zuordnung mit entsprechender Bauraum-Ersparnis in axialer Richtung ergibt.

In Fig. 4 ist eine prinzipgleiche Ausgestaltung des Druckausgleichers 2.4 gezeigt, wenn dieser einer Wellendichtung 22.4 außen um einen Axialabstand 24 entfernt vorgeordnet ist. Hier wurde ebenfalls, ähnlich wie nach Fig. 3, ein ringförmiger Einsatzkörper verwendet, welcher jedoch mittels Ringdichtungen 25 gegenüber der Welle 21 und dem Maschinengehäuse 1 abgedichtet ist.

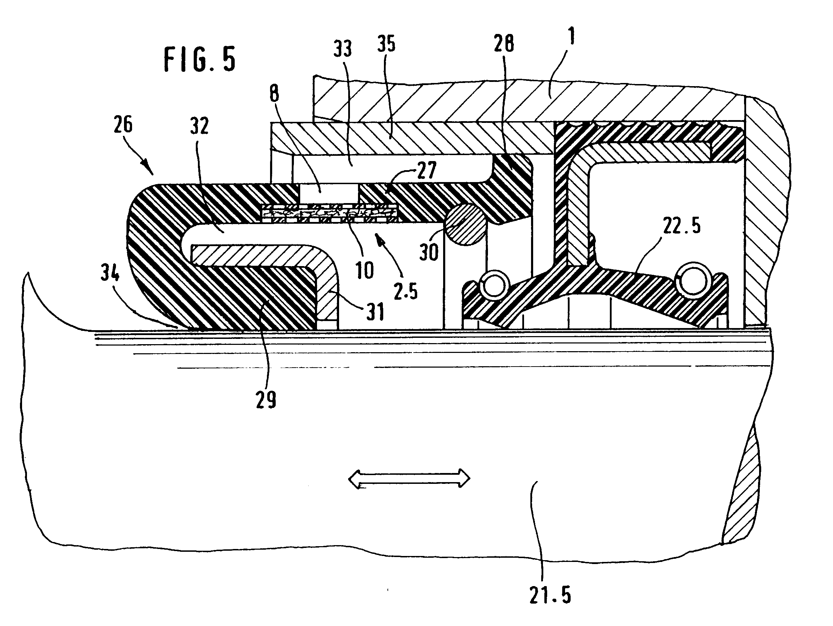

In Fig. 5 ist der Einsatz eines erfindungsgemäßen Druckausgleichers 2.5 unmittelbar in einem einer Wellendichtung 22.5 außen axial vorgeordneten zusätzlichen Dichtelement 26 gezeigt. Dieses an sich beliebig ausführbare Dichtelement 26 hat hier die Aufgabe, mit der Welle 21.5 gewisse Axialbewegungen mitzumachen, durch die der Raum vor der eigentlichen Wellendichtung 22.5 variiert, also für sich alleine be- oder entlüftet werden muß. Dazu wurde in einem etwa achsparallelen Mittelteil 27 des Dichtelementes 26 an mehreren Stellen je ein Atmungskanal 8 ausgeschnitten, welcher innen überdeckt ist durch eine ringförmige oder mehrere kleine Membran(en) 10, die eingeklebt oder einvulkanisiert werden könnten. Dank der Belüftung liegt das Dichtelement 26 mit seinem äußeren Bund 28 und seinem inneren Bund 29 an der Welle 21.5 oder dem Maschinengehäuse 1 stets gleich stark radial an, auch wenn in der Mitte des achsparallelen Mittelteiles 27 einmal gewisse Deformationen infolge der Axialbewegungen auftreten, wird eine haltbare Befestigung der Membran 10 erreicht. Bei dem als Beispiel gezeigten Dichtelement 27 wird die Dichtpressung nach außen durch eine Spreizfeder 30 und nach innen durch einen Stützring 31 unter Beibehaltung einer ausreichend großen inneren Ringnut 32 unter einer äußeren Radialspalte 33 derart sichergestellt, daß bei keiner Verformungsart des Dichtelementes 26 auch die Membran 10 blockiert werden könnte. Im Beispiel wird der Atmungskanal 8 noch von einer besonderen verschleißfesten Laufbuchse 35 axial mit Abstand überdeckt, so daß Staub und Schmutz nicht unmittelbar an den Atmungskanal 8 gelangen können.
Mit diesen Anordnungsmöglichkeiten wird eine lange Nutzbarkeitsdauer der Atmungselemente der Druckausgleicher bei kostengünstiger Herstellbarkeit möglich, wobei Abwandlungen bei entsprechend anders gelagerten Einbaubedingungen als im Bereich des Erfindungsgedanken liegend angesehen werden. Dank der ventilgemäßen Eigenarten des für die Membran 10 verwendeten Textilwerkstoffes sind mit dem erfindungsgemäßen Druckausgleicher auf Dauer wirksame Getriebe- bzw. Maschinenschutzmaßnahmen bei geringem Material- und Montage- bzw. Wartungsaufwand möglich. Es kann sich kein Öldunst mehr im Bereich des Atmungskanales niederschlagen. Wasser kann nicht über Entlüfter in Maschinengehäuse eintreten. Die Ent- und Belüftung wird nicht mehr durch Schmutzverstopfungen des Atmungskanales behindert und Überdrücke, die Wellendichtungen gefährden könnten, entfallen.

### Bezugszeichen

- 1: Maschinengehäuse
- 2: Druckausgleicher
- 2.1: Druckausgleicher mit 3.1
- 2.2: Druckausgleicher mit 3.2
- 2.3: Druckausgleicher mit 3.3
- 3: Einsatzkörper
- 3.1: Einsatzkörper als Nippel
- 3.2: Einsatzkörper als Kassette
- 3.3: Einsatzkörper als Dichtelement
- 4: Gehäuseöffnung
- 5: Gewinde in 4
- 6: Gehäusedichtung
- 7: Abdeckung (Schmutzabweiser)
- 8: Atmungskanal (Bohrung)
- 9: Niederhalter
- 9A: Distanzhülse
- 10A, 10B: Membranen (Schmiermittelausflußverhinderer)
- 11: Öffnung in 9
- 12A, 12B: O-Ringe (Elastomer-Unterlage für 10)
- 13A, 13B: Stützfolien bzw. -gitter
- 14: Zwischenraum bzw. Schwingungsfreiraum für 10 bei nur einer Membran
- 15: Rand von 7
- 16: Sieke in 7
- 17: Distanzelement bzw. Hülse
- 18: Schrauben für 7
- 19: Noppen in 7
- 20: Ringnut in 1
- 21: Welle
- 22: Lagerbohrung
- 22.4: Wellendichtring
- 23: Zwischenwand von 1
- 24: Axialabstand von 3.4 und 22.4
- 25: Dichtungen von 3.4 in 1
- 26: Dichtelement mit 7 und 8
- 27: Achsparalleles Mittelteil von 26
- 28: Außenbund von 26
- 29: Innenbund von 26
- 30: Spreizfeder für 26
- 31: Stützring für 26
- 32: Innenringnut von 26
- 33: Äußerer Radialspalt an 26
- 34: Innerer Radialspalt an 26
- 35: Laufbuchse in 1
- A: Abstand von 3.1 und 7 für 8

## Patentansprüche

1. Druckausgleicher (2) zwischen Maschinengehäusen (1) und Umgebung, im wesentlichen bestehend aus:
- einem eine Öffnung (4) eines Gehäuses (1) abdeckenden Atmungselement (3),
- mit einem Atmungskanal (8) für wechselnde Strömungsrichtungen, in dem eine gasdurchlässige, Schmiermittel zurückhaltende Vorrichtung liegt, dadurch
**gekennzeichnet,**
- daß die Vorrichtung eine im Betriebsdruckbereich flüssigkeitsdichte, aber gasdurchlässige Kunststoff-Membran (10) mit einem Stützgitter (13) aus geringer elastischem Material ist,
- welche zusammen durch einen Niederhalter (9) an ihrem Rande dichtend gegen eine elastische Unterlage (12) gepreßt sind und beim Verändern von Druckdifferenzen flattern bzw. vibrieren können.

2. Druckausgleicher nach Anspruch 1, dadurch **gekennzeichnet,**
- daß zwei Membranen (10A, 10B) mit einem Zwischenraum (14) vorgesehen sind,
- welche jeweils mindestens einseitig mit einem Stützgitter (13) kombiniert so gegen die Unterlage (12) eingespannt sind, daß der Zwischenraum (14) durch die innere Membran (10B) schmiermittelfrei und durch die äußere Membran (10A) staub- und wasserfrei gehalten wird.

3. Druckausgleicher nach Anspruch 2, dadurch **gekennzeichnet,**
- daß der Abstand der Membranen (10A und 10B) zueinander durch Distanzelemente (12, 17) gebildet ist,
- welche aus einer den Atmungskanal (8) umgebenden und im Niederhalter (9) verschieblich geführten Hülse (17) mit jeweils stirnseitig vor derselben zentriert gehaltenen Elastomer-Unterlagen (12) bestehen, gegen die die Randbereiche der beiden Membranen (10A und 10B) samt evtl. zugehörigen Stützgittern (13) dichtend angepreßt werden.

4. Druckausgleicher nach Anspruch 3, dadurch **gekennzeichnet,**
- daß die Innenränder der Öffnung (11) des Niederhalters (9) von der Membran (10) wegweisend abgerundet sind
- und daß Unterlagen (12) sowie Distanzelemente (17) im Bereich ihres Innendurchmessers Rundkantenprofile haben.

5. Druckausgleicher nach Anspruch 2, dadurch **gekennzeichnet,** daß der äußeren Membran (10A) eine perforierte Folie und der inneren Membran (10B) ein Vliesmaterial als Stützgitter (13) jeweils auf der gehäuseabgewandten Seite unmittelbar zugeordnet ist.

6. Druckausgleicher nach Anspruch 1, dadurch **gekennzeichnet,** daß der Druckausgleicher (2) als Einsatzkörper (3.1 bzw. 3.2 bzw. 3.3) ausgebildet ist, der dem Maschinengehäuse (1) angepaßt und mit Membrane (10) etc. komplett austauschbar ist.

7. Druckausgleicher nach Anspruch 1, dadurch **gekennzeichnet,** daß ein äußerer Schmutzabweiser (7) für den Einsatzkörper (3.1 bzw. 3.2 bzw. 3.3) vorgesehen ist.

8. Druckausgleicher nach Anspruch 7, dadurch **gekennzeichnet,** daß der Schmutzabweiser (7) am Maschinengehäuse (1) befestigt ist.

9. Druckausgleicher nach Anspruch 7, dadurch **gekennzeichnet,** daß der Schmutzabweiser (7) aus einer glockenförmigen Abdeckung (7) des Einsatzkörpers (3.1 bzw. 3.2 bzw. 3.3) besteht, zu dem ein freier Abstand (A) entsprechend dem Querschnitt des Atmungskanals (8) vorgesehen ist.

10. Druckausgleicher nach Anspruch 6, dadurch **gekennzeichnet,** daß der Einsatzkörper (3.3) unmittelbar selbst aus einem Dichtelement (26) besteht, in welchem am Umfang Atmungskanäle (8) vorgesehen sind, welche mittels eingeklebter bzw. eingeschweißter Membranen (10) verschlossen sind.

## Claims

1. Device (2) for equalizing pressure between machine housings (1) and the environment, substantially comprising:
- a breathing element (3) which covers an opening (4) of the housing (1),
- with a breathing channel (8) for alternate flow directions, in which is situated a device which is permeable to gas but impermeable to lubricant,
characterized in that
- the device is an - in the operating pressure range - liquid-tight but gas-permeable plastic diaphragm (10) with a support mesh (13) made of less elastic material,
- which are together pressed at their edge by a holding-down device (9) sealingly against an elastic support (12) and upon a variation in pressure differences may flutter or vibrate.

2. Pressure-equalizing device according to claim 1,
characterized in that
- two diaphragms (10A, 10B) with an intermediate space (14) are provided,
- which, combined in each case at least on one side with a support mesh (13), are clamped against the support (12) in such a way that the intermediate space (14) is kept free of lubricant by the inner diaphragm (10B) and free of dust and water by the outer diaphragm (10A).

3. Pressure-equalizing device according to claim 2,
characterized in that
- the distance between the diaphragms (10A and 10B) is defined by distance elements (12, 17),
- which comprise a sleeve (17), which surrounds the breathing channel (8) and is displaceably guided in the holding-down device (9), and elastomer supports (12), which are each held centered in front of an end face of said sleeve and against which the edge regions of the two diaphragms (10A and 10B) and any associated support meshes (13) are sealingly pressed.

4. Pressure-equalizing device according to claim 3,
characterized in that
- the inner edges of the opening (11) of the holding-down device (9) are rounded off so as to point away from the diaphragm (10)
- and supports (12) and distance elements (17) have round-edged profiles in the region of their internal diameter.

5. Pressure-equalizing device according to claim 2,
characterized in that, as support meshes (13), a perforated film and a fleece material are directly associated, in each case on the side remote from the housing, with the outer diaphragm (10A) and the inner diaphragm (10B) respectively.

6. Pressure-equalizing device according to claim 1,
characterized in that the pressure-equalizing device (2) takes the form of an insert body (3.1 or 3.2 or 3.3) which is adapted to the machine housing (1) and is exchangeable complete with diaphragm (10) etc.

7. Pressure-equalizing device according to claim 1,
characterized in that an outer dirt-repelling device (7) is provided for the insert body (3.1 or 3.2 or 3.3).

8. Pressure-equalizing device according to claim 7,
characterized in that the-dirt-repelling device (7) is fastened to the machine housing (1).

9. Pressure-equalizing device according to claim 7,
characterized in that the dirt-repelling device (7) comprises a bell-shaped cover (7) of the insert body (3.1 or 3.2 or 3.3), relative to which a free clearance (A) according to the cross-section of the breathing channel (8) is provided.

10. Pressure-equalizing device according to claim 6,
characterized in that the insert body (3.3) itself directly comprises a sealing element (26), in the periphery of which are provided breathing channels (8) which are closed with the aid of diaphragms (10) glued or welded therein.

## Revendications

1. Dispositif d'égalisation de pression (2) entre des carters de machines (1) et l'environnement, comprenant essentiellement :
- un élément de respiration (3) couvrant un orifice (4) d'un carter (1)
- et pourvu d'un conduit de respiration (8) prévu pour des sens d'écoulement alternés, dans lequel se trouve un dispositif de retenue de lubrifiant qui est perméable aux gaz **caractérisé** en ce que :
- le dispositif de retenue est une membrane en matière synthétique (10) qui, dans le domaine des pressions de service, est imperméable aux liquides mais perméable aux gaz, avec une grille de soutien (13) en matière à faible élasticité,
- lesquelles sont pressées ensemble de manière étanche sur leur bord contre une cale élastique (12) au moyen d'un organe de maintien (9) et peuvent respectivement flotter et vibrer en cas de variation de pression différentielle.

2. Dispositif selon la revendication 1, **caractérisé**
- en ce qu'il est prévu deux membranes (10A, 10B) et un intervalle (14) entre elles,
- chacune de ces membranes étant combinée à une grille de soutien (13) au moins d'un côté et pressée avec elle contre la cale (12) de telle manière que ledit intervalle (14) est maintenu à l'abri du lubrifiant par la membrane intérieure (10B) et à l'abri de la poussière et de l'eau par la membrane extérieure (10A).

3. Dispositif selon la revendication 2, **caractérisé**
- en ce que l'écartement mutuel des membranes (10A et 10B) est assuré par des éléments distanceurs (12, 17)
- qui sont formés par une douille (17) entourant le conduit de respiration (8), guidée en coulissement dans l'organe de maintien (9) et dont les deux faces frontales sont pourvues de cales en élastomère (12) qui sont centrées par la douille et contre lesquelles les zones de bord des deux membranes (10A et 10B), ainsi que d'éventuelles grilles de soutien respectives (13), sont pressées de manière étanche.

4. Dispositif selon la revendication 3, **caractérisé**
- en ce que les bords intérieurs de l'orifice (11) de l'organe de maintien (9) sont arrondis de façon à s'éloigner de la membrane (10),
- et en ce que les cales (12) et les éléments distanceurs (17) ont des bords à profil arrondi dans la zone de leur diamètre intérieur.

5. Dispositif selon la revendication 2, **caractérisé** en ce qu'il comporte, en guise de grille de soutien (13) directement sur le côté opposé au carter de chaque membrane, une feuille perforée associée à la membrane extérieure (10A) et une natte de fibres associée à la membrane intérieure (10B).

6. Dispositif selon la revendication 1, **caractérisé** en ce qu'il est formé par un bloc accessoire (3.1, 3.2, 3.3) qui est monté sur le carter de machine (1) et peut être remplacé au complet avec sa membrane (10) etc.

7. Dispositif selon la revendication 1, **caractérisé** en ce qu'il est prévu un élément protecteur extérieur (7) pour protéger le bloc accessoire (3.1, 3.2, 3.3) contre la saleté.

8. Dispositif selon la revendication 7, **caractérisé** en ce que l'élément protecteur (7) est fixé au carter de machine (1).

9. Dispositif selon la revendication 7, **caractérisé** en ce que l'élément protecteur (7) est formé par un couvercle en cloche (7) du bloc accessoire (3.1, 3.2, 3.3), en regard duquel il laisse un dégagement (A) qui correspond à la section transversale du conduit de respiration (8).

10. Dispositif selon la revendication 6, **caractérisé** en ce que le bloc accessoire (3.3) est formé lui-même directement par un élément d'étanchéité (26) dont le pourtour comporte des conduits de respiration (8) qui sont obturés au moyen de membranes (10) collées ou soudées dans ledit élément.
